# EUROPEAN PATENT APPLICATION

(11) **EP 2 239 388 A1**
(43) Date of publication of application: **13.10.2010**
(21) Application number: 09004529.5
(22) Date of filing: 30.03.2009
(51) Int. Cl.: E04B 1/76, F24J 2/04, F24J 2/34

(54) **Building component based on a phase change material**

(71) Applicant: Kalzip GmbH, 56070 Koblenz (DE)
(72) Inventor: Neuwald, Jürgen, 56070 Koblenz (DE); Kellermann, Frank, 56070 Koblenz (DE)
(74) Representative: Bodin, Andre

(57) **Abstract**

Building component for mounting against, forming of or integrating in a roof, floor, ceiling or an interior or exterior wall of a building, the building component comprising a heat accumulating material, wherein the heat accumulating material is a phase change material, for accumulating thermal energy at a first point in time and releasing the thermal energy at a second point in time.

## Description

This invention relates to a building component for mounting against, forming of or integrating in a ceiling or a wall, the use thereof, and the use thereof in a method of controlling the interior climate of a building using said building component.

Conventionally, buildings are made of masonry or stone walls. These walls, particularly when the walls are thick, such as a church wall, store heat, which may be solar heat, or cold during the day, especially during a hot day, keeping the inside of the building cool, and release the heat during cooler periods, preventing the interior of the building from cooling down.

Modem buildings methods often use lightweight metal panels, the panels often being prefabricated off-site. These panels usually lack the heat storage capacity in comparison to thicker walls or roofs made of stone, masonry or tiles. This lack of heat storage capacity may lead to larger temperature fluctuations in the interior over time as compared to buildings made from conventional materials such as stone, concrete or bricks. These larger temperature fluctuations or temperature differences lead to an increased use of cooling during the hotter periods and heating during the cooler periods.

It is an object of the invention to provide a building component for mounting against, forming of, or integrating in a roof, floor, ceiling or a wall of a building, which provides a reduction in temperature difference between the hot period and the cool period in a building.

This object is reached by providing a building component for mounting against, forming of or integrating in a roof, floor, ceiling or an interior or exterior wall of a building, the building component comprising a heat accumulating material, wherein the heat accumulating material is a phase change material, for accumulating thermal energy at a first point in time and giving off (i.e. emitting) the thermal energy at a second point in time. It is noted that the heat accumulating material is also understood to be able to accumulate cold. In an interior building component a front panel may be provided as the side of the building component, which faces the interior of the building, whereas the heat accumulating material is located between the front panel and the ceiling or wall of the building. The building component may also be integrated in a ceiling, roof, floor or a wall of a building. The wall may extend from the floor to the ceiling of the building, or it may extend over part of the distance between the floor and the ceiling of the building, for instance as a divider between cubicles in an office building. The heat accumulation material must be in thermal contact with the interior of the building, either directly, or indirectly through thermal contact with the front panel which faces the interior of the building. This thermal contact may be achieved by directly attaching the heat accumulation material to the side of the metal front panel which does not face the interior of the building, or there may be an intermediary material between the heat accumulating material and the side of the metal front panel which does not face the interior of the building. This intermediary material is preferably heat conducting so as to enable the conduction of thermal energy such as heat or cold to and from the heat accumulating material to the metal front panel.

It should be noted that the panel or the front metal panel may be flat or at least substantially flat, but that it also may be profiled. Apart from a different aesthetic aspect, the difference in shape has an effect on the surface of the front metal panel, which is relevant for the speed of absorption or release of heat by the panel. Preferably the front panel a metal front panel, preferably made of steel, stainless or otherwise, such as low-alloy or unalloyed steel, or of an aluminium alloy. The metal panel may be provided with a coating system comprising metallic or organic coating layers to protect the panel and/or to give it a chosen appearance. Other appropriate coatings such as textiles or stucco may also be applied.

In an embodiment of the invention the front panel at least partly consists of a perforated metal, an expanded metal, a wire cloth or combinations thereof. These types of front panels provide a quick heat transport through the front panel to the phase change material besides being aesthetically and acoustically appropriate for a building component. The metal front panel may be provided with a coating system comprising metallic or organic coating layers to protect the panel and/or to give it a chosen appearance. Other appropriate coatings such as textiles may also be applied.

During the hotter period, the temperature of the air near the panel increases and the heat is absorbed by the heat-accumulating material. The panel functions as a passive element. The panel may also have acoustical and esthetic functions. In this invention, the heat accumulating material is a phase change material. The inner part comprising the heat accumulating material is mounted between the backside outer panel and the front panel.

A phase change material in the context of this invention is defined to be a material that is transformable from a first phase (for instance a solid phase) into a second phase (for instance a liquid phase). During that phase transformation or phase change between the solid and liquid phase, large quantities of thermal energy at nearly constant temperature, i.e. the melting temperature or phase transition temperature, can be stored and released. A classic heat storage material, having a specific heat capacity *c* and a mass, *m* stores a heat amount *Q* in dependence of the temperature difference Δ*T* of *Q*=*m·*ç*·*Δ*T*. Phase change materials use the specific phase-change enthalpy, i.e. the specific melting enthalpy in case of a solid-liquid phase transition. During the phase change an additional heat storage of *m*·Δ*h*_{phase-change} is available, resulting in *Q=m·ç·*Δ*T* + *m*·Δ*h*_{phase-change}. The temperature of the material does generally not change during the phase change, and hence these types of heat storage materials are sometimes referred to as latent heat storage materials. Advantageous is therefore that large quantities of thermal energy can be stored and released at a relatively constant temperature, even when limited volumes and low operating temperature differences are applicable. A known phase change material is paraffin, in which case the phase change is between the solid and liquid phase. The phase change may also be between a first solid phase and a second solid phase, for instance a glass-transition transformation in a polymeric material. By selecting a suitable phase change material, the phase transition temperature can be selected, for instance 21°C.

By using this phase change material as a heat accumulating material the amount of heat which can be absorbed and released is very high, thereby efficiently emulating the thermal characteristics of a conventional roof made of materials such as ceramic or slate roofing tiles or of a conventional wall made of materials such as stone, concrete or masonry. A thin layer of a phase change material is already sufficient to emulate the heat storage capacity of a thick stone wall.

The heat stored in the phase change material within the interior component during a hot period is released during a colder period thereby levelling the temperature difference between the hotter and the colder periods. The phase change in the phase change material such as from solid to liquid or solid to solid must be substantially reversible so as to enable benefiting from the thermal cycle of heat accumulation and heat release repeatedly over a sustained period of time, such as many years, so as to enable interior climate control of the building over the said sustained period of time.

The effect of absorbing heat during a hotter period and releasing heat during a colder period can also be used to increase the thermal capacity of the interior of a building, for reducing the temperature fluctuations during heating of an interior space using a central heating system. The absorption of the heat generated by the heating system is at least partly absorbed in the heat accumulating material and emitted slowly to the interior. This enables operating the heating device in an operating window wherein the heating device is more efficient in terms of the caloric value of the fuel or the electricity used in the heating system for heating the interior. By selecting the phase transition temperature, the main function of the phase change material can be selected. By selecting a phase transition temperature below the desired average temperature of the interior, for instance 15°C, the building component is particularly suitable for storing cold at a first period in time (for instance during the night) and giving off (i.e. emitting) the cold at a second period in time (for instance during the day) thereby keeping the interior cool during the hotter period. By selecting a phase transition temperature around the desired average temperature of the interior, for instance 20°C, the building component is particularly suitable for storing heat or cold depending on the actual temperature of the interior. By selecting a phase transition temperature above the desired average temperature of the interior, for instance 30°C, the building component would be particularly suitable for cooperating with a heating system, such as a central heating system. By selecting a phase transition temperature around the freezing point of water, and applying this in a roof or exterior wall, the risk of icicles forming on the roof is reduced.

In a preferred embodiment the building component is provided for mounting against a ceiling or a wall of a building comprising a backside outer panel, an inner part comprising a heat accumulating material and a front panel, wherein the heat accumulating material is a phase change material. The panel is mounted with its backside outer panel facing the wall or the ceiling of the building. This backside outer panel is preferably a metal panel, preferably made of steel, stainless or otherwise, such as low-alloy or unalloyed steel, or an aluminium alloy. The metal panel may be provided with a coating system comprising metallic or organic coating layers to protect the panel and/or to give it a chosen appearance. The backside outer panel may be provided by a cured product such as gypsum or the like. Of course the component may also be mounted against a door or form an integral part thereof.

In an embodiment of the invention the phase change material in the building component acts as a sound absorbing material, preferably wherein the sound absorbing characteristics are in the low frequency noise range, such as airplane and vehicular traffic noise, thereby avoiding acoustical discomfort in the building. The mechanical inertia of the additional mass of the phase change material provides a much lower resonance frequency than the surrounding metal components of the building, and therefore provides excellent resistance against a much wider sonic frequency spectrum, as a result the sound reduction index of the building is better and especially the building shows a higher resistance against low frequent sounds, such as those cause by traffic on a motorway, heavy machinery, or aeroplanes. Also impact sounds will be reduced.

The additional mass per square metre absorbs airborne sound, so the rated sound reduction level [dB] of the whole building will be enhanced. Conventional lightweight buildings need to utilise the deadweight of miscellaneous panels e.g. gypsum or cement boards to enhance the sound reduction level. Those additional boards do not come with any additional function. Therefore the phase change material combines different positive aspects of buildings physics and reduces costs per installed square metre. The mechanical inertia of the additional mass of the phase change material provides a much lower resonance frequency than the surrounding metal components of the roof build up, therefore the roof build up provides excellent resistance against a much wider sonic frequency spectrum, as a result the sound reduction index of the build up is generally better and especially the build up shows a higher resistance against low frequent sonic.

In an embodiment of the invention, the heat accumulating material is provided in discontinuous portions of a suitable shape, for instance in the form of strips, tiles or a combination thereof. The space in between the strips may be filled with an intermediary material so as to enable the conduction of heat to and from the heat accumulating material to the metal front panel, and/or between the portions of the heat accumulating material. Preferably, the intermediary material is heat conducting. This has the effect that any temperature differences over the surface of the metal front panel are equalized more quickly. By selecting the appropriate number of strips or tiles and the distance between the strips or tiles in the building component, the thermal capacity per surface area of metal front panel can be tailored to the needs of the location where the building component is to be mounted. By selecting an appropriate intermediary material, the building component provided with strips or tiles may emulate a building component, which is provided with heat accumulating material over the entire surface of the metal front panel, thereby reducing costs without sacrificing comfort.

In an embodiment the heat accumulation material is provided to substantially the entire surface of the backside of the metal front panel. This way the thermal capacity of the building component is maximized for a chosen thickness and sort of heat accumulating material. When a maximum thermal capacity per surface area of metal front panel is required, the entire backside of the metal front panel should be provided with heat accumulating material having the desired thermal properties.

In an embodiment, the building component comprises a photovoltaic module is mounted close to or against the component so as to passively cool the module during the first point in time, thereby obtaining an efficiency increase of the module. The efficiency of a photovoltaic module decreases when the temperature of the module increases. By combining the photovoltaic module with the passive cooling provided by the PCM, the efficiency of the module is kept high without incurring costs for actively cooling the modules. In a further embodiment channels may be provided in the PCM through which a heat absorbing medium is channelled. The medium may absorb the heat stored in the PCM and transport it to another location where the heat of the medium is put to use. The heat absorbing medium may be a different PCM, but it may also be a known heat absorbing medium used in e.g. solar collector systems.

In an embodiment of the invention, the building component is used in the outer wall and/or roof construction thereby obtaining a slower thermal elongation and shrinking of the roof and wall, and thereby avoiding acoustical discomfort in the form of clicking noises. Many metal buildings suffer from this phenomenon, and this phenomenon can be greatly reduced if the heating rate and cooling rate of the walls is reduced. This effect is obtained by the constant temperature of the PCM during the transformation thereof in the component.

In an embodiment the building component is used in the outer wall and/or roof construction of a building thereby reducing the thermal footprint of the building in a built-up area, and thereby reducing the detectability of the building for heat sensitive weapons such as heat-seeking missiles. In another embodiment the building component is used in the outer wall and/or roof construction and/or interior walls of a building thereby reducing the thermal footprint of the building in a built-up area, and thereby preventing heat accumulation above built-up areas, and thereby avoiding katabatic winds.

A katabatic wind, from the Greek word katabatikos meaning "going downhill", is the technical name for a drainage wind, a wind that carries high density air from a higher elevation down a slope under the force of gravity. Such winds are sometimes also called fall winds.

A katabatic wind may originate from the heating of air over a city. Since the density of air decreases with higher temperature, the air from the surrounding countryside will flow towards the city. This may cause storms, sand storms or dust storms. By using the building components in accordance with the invention, the built-up area will not heat as much during the day, and not as quickly, and the heating of the air above the city will be less. During the evening and night the built-up area will not cool as fast. The katabatic winds will be reduced or avoided.

In an embodiment of the invention the front panel and/or the back panel is provided at least partly with holes. This embodiment allows for a quicker heat transport through the front panel to the phase change material. The holes also increase the acoustic dampening of the panel.

The phase change material may be provided in the form of a solid panel such as a sheet, optionally provided in discontinuous portions of a suitable shape, for instance in the form of strips, tiles or a combination thereof, or as a thin layer such as a foil. It may also be provided in the form of a granular compound or any other form with a large specific surface enclosed between the backside outer panel and the metal front panel. In case the granular compound is to be used in the absence of a backside outer panel, the granular compound may be provided in the form of a condensed or compacted material analogous to polystyrene foam, or the granules may be immobilized by gluing or melting together, or by immobilizing the granules in a setting compound such as gypsum, for instance to produce a gypsum plate provided with the phase change material, or the granules may need to be enclosed between sheets or in a pouch for preventing the granules to be dislocated. This pouch may be rigid or flexible, and the pouch material is preferably heat conducting. Preferably the pouch is substantially of one thickness, thereby emulating a sheet or plate of phase change material. The granules may consist entirely of phase change material, or the granules may be of a suitable material comprising the phase change material, for instance by enclosing the phase change material in a shell of a suitable material.

By employing phase changes materials with different thicknesses and/or heat capacity, the thermal capacity of a building component can be adapted locally. Although the invention is described in terms of the use of the building component for walls, ceilings and dividers, it will be clear that the building component may also be mounted on the floor of a building or form an integrated part of the floor of the building, particularly when the floor is provided with a floor heating or cooling system.

According to a second aspect of the invention, a method is provided of controlling the internal climate of a building using an building component as described above wherein thermal energy or heat which is accumulated in the heat accumulating material at a first point in time is released, i.e. emitted, at a second point in time, thereby levelling the temperature differences or variations over time. It is noted that thermal energy in this context also includes storage of cold at a first point in time and emission thereof at a second point in time.

The invention is also embodied in the use of a building component according to the invention in or onto a floor, in or onto a wall or in or onto a ceiling in the interior of a building, wherein in a floor, in a wall and in a ceiling is to be understood as forming an integral part of the floor, wall or ceiling.

## Claims

1. Building component for mounting against, forming of or integrating in a roof, floor, ceiling or an interior or exterior wall of a building, the building component comprising a heat accumulating material, wherein the heat accumulating material is a phase change material, for accumulating thermal energy at a first point in time and releasing the thermal energy at a second point in time.

2. Building component according to claim 1 wherein the phase change material acts as a sound absorbing material.

3. Building component according to claim 2 wherein the sound absorbing characteristics are in the low frequency noise range, such as airplane and vehicular traffic noise, thereby avoiding acoustical discomfort in the building.

4. Building component according to any one of the preceding claims wherein a photovoltaic module is mounted close to or against the component so as to passively cool the module during the first point in time, thereby obtaining an efficiency increase of the module.

5. Building component according to any one of the preceding claims for use in the outer wall and/or roof construction thereby obtaining a slower thermal elongation and shrinking of the roof and wall, and thereby avoiding acoustical discomfort in the form of clicking noises.

6. Building component according to any one of the preceding claims for use in the outer wall and/or roof construction thereby reducing the thermal footprint of the building in a built-up area, and thereby reducing the detectability of the building for heat sensitive weapons such as heat-seeking missiles.

7. Building component according to any one of the preceding claims for use in the outer wall and/or roof construction and/or interior walls thereby reducing the thermal footprint of the building in a built-up area, and thereby preventing heat accumulation above built-up areas, and thereby avoiding katabatic winds.

8. Building component according to any one of the preceding claims, wherein the component comprises at least one input conduit and at least one output conduit for conducting a heat absorbing medium, wherein the heat absorbing medium after having absorbed solar energy, is passable to a thermal accumulator, or to a conversion unit wherein the solar energy is convertible into energy of a different type.

9. Building component according to claim 8, wherein the heat-absorbing medium comprises phase change materials.

10. Use of building components according to any one claim 1 to 9 in or onto a floor, in or onto a wall or in or onto a ceiling of a building.

11. Method of controlling the internal climate of a building using building components according to claim 1 to 9 wherein thermal energy which is accumulated in the heat accumulating material at a first point in time is released at a second point in time, thereby levelling the temperature differences or variations over time.

12. Method in accordance with claim 11 wherein the building is provided with photovoltaic modules mounted close to or against the component so as to passively cool the module during the first point in time, thereby obtaining an efficiency increase of the module.

13. Method in accordance with claim 11 or 12 wherein the building comprises building components according to claim 8 or 9.
